# EUROPEAN PATENT APPLICATION

(11) **EP 3 845 588 A1**
(43) Date of publication of application: **07.07.2021**
(21) Application number: 20209209.4
(22) Date of filing: 23.11.2020
(51) Int. Cl.: C08K 5/00, C09D 5/00

(54) **ECOLOGICAL SOLVENT FOR USE IN THE METAL BUTTON DYEING PROCESS**

(30) Priority: 22.11.2019 TR 201918237
(71) Applicant: Timay Citcit Rivet ve Percin San. ve Tic. A.S., Amasya (TR)
(72) Inventor: Atmaca, Aysegul, 05300 Amasya (TR)
(74) Representative: Mutlu, Aydin

(57) **Abstract**

The present invention relates to the use of dibasic ester, which does not contain banned chemicals such as xylene and toluene, as a solvent for thinning dyes used in the dyeing process of metal textile accessories and/or metal industrial accessories. More specifically, the present invention relates to the use of dibasic ester as an environmentally friendly, economical and effective solvent in the metal button dyeing process and to a method for dyeing metal buttons.

## Description

### Technical Field

The present invention relates to the use of dibasic ester as a thinner and/or solvent in a dyeing process of metal textile accessories and/or metal industrial accessories. More specifically, the present invention relates to the use of dibasic ester as an environmentally friendly and economical solvent in the metal button dyeing processes and to a method for dyeing metal buttons.

### Background of the Invention

Dibasic ester (DBE) is an ester of dicarboxylic acid. Dibasic esters with the chemical formula C₂₁H₃₆O₁₂ are presented as a refined mixture of dimethyl esters of succinic, glutaric and adipic acids. The chemical structures of said esters, namely dimethyl succinate (I), dimethyl glutarate (II) and dimethyl adipate (III), are shown below.

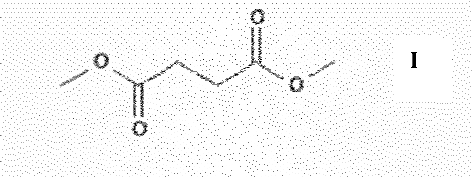

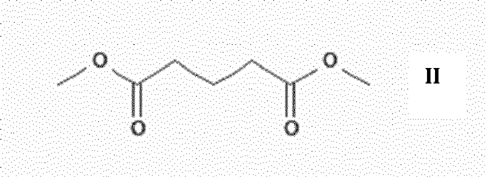

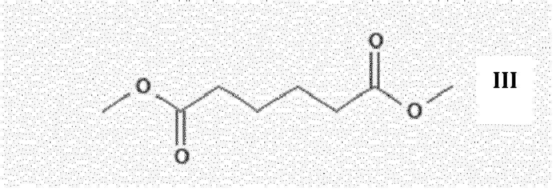

DBE is in the form of a colorless liquid and has a slight fruit odor. It is not flammable or corrosive. While DBE is easily soluble in alcohols, ketones, ethers and many hydrocarbons, it is poorly soluble in water. Its ignition temperature is high (i.e. considered non-flammable substance). It is stable at normal temperature, humidity and pH. It is not harmful to human health since it is not allergenic and carcinogenic. In addition to these features, DBE is an environmentally friendly chemical in terms of being biodegradable in nature, being reusable by vacuum distillation and having low toxicity. Depending on these its advantages, DBE is widely used as a solvent and thinner in paints, coatings and resins and it is a good alternative to harmful chemicals such as toluene and xylene *(*Kob, N. E. (2002). Dibasic Ester: A Low Risk, Green Organic Solvent Alternative. Clean Solvents, 238-253*).*

US 2007/101902 relates to a solvent with low VOC content. The solvent, which is stated to have an equal performance with conventional solvents with high VOC content, can be used on dyes or coatings. Recommended uses of the solvent, consisting of 20 to 80% soy methyl ester, 20 to 80% dibasic ester and triethanolamine, include the use as a lacquer and dye thinner.

Metal textile accessories, especially metal buttons, are an important part of textile products. It is essential that these accessories are dyed or coated with dyes or coatings resistant to washing, dry cleaning and ironing. In addition to being durable, is is preferable in metal accessory dyeing process that the dyes and their components are low cost, easy to store and environmentally friendly.

Currently, acrylic thinner, acetone, methyl acetate and tert butyl acetate containing chemicals such as toluene and xylene are widely used as diluents and solvents in metal accessory dyes. WO 2007/142753 relates to a thinner for lacquer and other coatings. The diluent comprises a solvent consisting of a group consisting of 80% to 90% by weight of acetone, methyl acetate, tert butyl acetate and mixtures thereof as the base solvent.

However, these chemicals are harmful to human health and the environment. In addition, they have a low boiling point, low ignition temperature and flash point values. Especially acrylic thinner has disadvantages such as the demandingness of storage and disposal stages due to the harmful chemicals it contains and the negative effects on the health of the employees in the dyeing industry.

Considering all these data, there is a need in the related technical field to provide effective, environmentally friendly and low-cost chemicals to be used as solvents in the dyeing process of metal accessories used in textiles and industry, especially metal buttons. Solvents and thinners with these properties will provide an improvement in metal accessory dyeing process.

### Summary of the Invention

In one aspect, the present invention provides the use of the dibasic ester as a dye solvent in the dyeing process of textile metal accessories and industrial metal accessories. In preferred embodiments of the invention, the textile metal accessory or industrial metal accessory is a metal button.

In another aspect, the present invention provides a method of dyeing metal accessories. The method comprises the following steps:
- thinning the dye which will be used in metal accessory dyeing process with dibasic ester,
- dyeing metal accessories with the spraying method, and
- performing drying and curing processes.

In preferred embodiments of the method according to the present invention, the metal accessory in the first step of the method is a metal button.

In further preferred embodiments of the method according to the present invention, the drying process in the third step of the method is performed in the oven.

In other preferred embodiments of the method according to the present invention, the curing process in the third step of the method is performed for 10 to 14 hours.

In one aspect, the present invention provides metal accessories obtained by the method according to the invention.

In preferred embodiments of the present invention, the metal accessory is a metal button.

### Detailed Description of the Invention

In this detailed description, the use of DBE and the dyeing method of metal accessories which is the subject of the present invention are described for a better understanding of the subject

Dibasic ester (DBE) refers to dimethyl esters of succinic, glutaric and adipic acids. Usually presented as a mixture of these three esters, dibasic esters are in the form of a colorless liquid. It does not contain harmful chemicals such as acetone, benzene, xylene and toluene. The ignition temperature, boiling temperature and flash point of dibasic ester, which is widely used as a solvent and thinner, is higher than other solvents. For this reason, it is safe to be included in the processes in dyeing/coating methods. Having the power to dissolve binders and additives, DBE provides the dye fluidity and a homogeneous mixture feature. This fluidity ensures that the pigments and binders are sprayed and spread evenly on the surface, as well as gaining the appropriate thickness. In addition to all these, DBE is a low cost and environmentally friendly chemical thanks to its easy storage and disposal processes, its degradability in nature and its low toxicity. Thanks to these features, DBE is a chemical approved by the ZDHC Foundation, which was established with the commitment of brands in the Textile, Leather and Footwear sector and aims to maintain production processes with safe chemicals instead of harmful chemicals.

It is preferable that the dyes and components thereof used in the dyeing processes of metal textile accessories, especially of metal buttons, are low-cost, easy to store and environmentally friendly. However, chemicals such as acrylic thinner, acetone, methyl acetate and tert butyl acetate, which are widely used in this field currently, are not only harmful to human health and the environment, but also have low boiling point, ignition temperature and flash point values. Especially acrylic thinner has negative effects on the health of employees in the dyeing industry due to harmful chemicals such as toluene and xylene it contains. Besides, storage and disposal stages are costly and inconvenient. In addition to these, the comparison of acrylic thinner, which does not have environmentally friendly chemical properties, and DBE with regards to chemical/physical properties is given in Table 1.

**Table 1. Comparison of the physical and chemical properties of acrylic thinner and dibasic ester**

| **Chemical-physical** P**roperties** | **Acrylic Thinner** | **Dibasic Ester** |
|---|---|---|
| **Form** | Liquid | Liquid |
| **Color** | Colorless | Colorless |
| **Odor** | Characteristic | Characteristic - Sweet |
| **pH** | NA | NA |
| **Boiling point** | 120 °C | 196 - 225 °C |
| **Flash Point** | 23 °C | 103 °C |
| **Ignition Temperature** | 270 °C | 370 °C |
| **Density** | 0,9 | 0,909 |
| **Banned chemical** | Contains | Does not contain |

Based on these facts, the inventors present the use of dibasic ester as a solvent in metal accessory dyeing processes with the aim of meeting the need for green-sustainable chemicals in today's technology and production conditions, by providing a balance between efficiency, cost and environmental impact. Thus, to be used in these processes; dibasic ester is provided as a substitute solvent to fulfill the function of the solvents used in the prior art In this way, it is aimed to prevent the use of solvents containing banned chemicals in processes by reducing the consumption of acrylic thinner, to eliminate storage problems, to eliminate the necessity of separate classification in disposal method, to eliminate the negative effects on employees and the environment, and to reduce costs. The inventors state that incorporating dibasic ester into their processes results in positive outcomes.

Thus, in one aspect, the present invention provides the use of the dibasic ester as a solvent in the dyeing process of textile metal accessories and industrial metal accessories. In preferred embodiments of the invention, the textile metal accessory or industrial metal accessory is a metal button.

In another aspect, the present invention provides a method of dyeing metal accessories comprising the following steps:
- thinning the dye which will be used in metal accessory dyeing process with dibasic ester,
- dyeing metal accessories with the spraying method, and
- performing drying and curing processes.

In preferred embodiments of the invention, the metal accessory in the first step of the method is a metal button.

In further preferred embodiments of the invention, the drying process in the third step of the method is performed in the oven.

In other preferred embodiments of the invention, the curing process in the third step of the method is performed for 10 to 14 hours.

In another aspect, the present invention provides metal accessories obtained by the method according to the invention. In preferred embodiments of the invention, the metal accessory is a metal button.

The use and applications of the metal button dyeing process according to the invention are described in detail in the following examples.

### Examples

Metal accessories (preferably buttons) to be dyed are prepared for dyeing by spraying method. Then, the dye mixture is prepared. For this, the dye must be thinned. Within the scope of the present invention, comparative studies were performed by diluting 6 types of dyes with acrylic thinner or dibasic ester. While 4 units of acrylic thinner must be used to dilute the same amount of dye, this measure is one unit for dibasic ester.

Prepared dyes are applied to metal accessories with the spray dyeing method. 2 curtain dye is applied with spray gun. After this process, the metal accessories are taken into the UFO oven for drying and drying is performed. Then, curing is performed for 12 hours. Thus, the dyeing process is completed and dyed metal accessories are obtained.

The present inventors evaluated the effectiveness of the dyeing process by performing the washing test. As a result of the washing test, it is understood that the dyes in which dibasic ester is used as a solvent/thinner are not different from dyes thinned with acrylic thinner in terms of efficiency. Therefore, it has been demonstrated that the dibasic ester can be used with high efficiency and effectiveness for dye thinning in the metal accessory dyeing process. In addition to these, dibasic ester is also advantageous in terms of cost because it is a more cost effective chemical and it is used in much less amount compared to acrylic thinner.

The studies performed within the scope of the present invention are summarized in Table 2.

**Table 2. Metal Accessory Dyeing Process**

| **CODE** | **FORMULATION** | | **PROCESS** | | | **Washing Test Result** |
|---|---|---|---|---|---|---|
| | | | **DYEING PROCESS** | **DRYING PROCESS** | **CURING** | |
| | **Ratio-Gram Used in the Mixture** | **DYE** | | | | |
| T101 | 20 | THINNER | 2 Curtain Dye Sprayer | UFO Oven | 12 HOUR | + |
| D101 | 5 | DBE | | | | |
| T102 | 20 | THINNER | 2 Curtain Dye Sprayer | UFO Oven | 12 HOUR | + |
| D102 | 5 | DBE | | | | |
| T103 | 20 | THINNER | 2 Curtain Dye Sprayer | UFO Oven | 12 HOUR | + |
| D103 | 5 | DBE | | | | |
| T104 | 20 | THINNER | 2 Curtain Dye Sprayer | UFO Oven | 12 HOUR | + |
| D104 | 5 | DBE | | | | |
| T105 | 20 | THINNER | 2 Curtain Dye Sprayer | UFO Oven | 12 HOUR | + |
| D105 | 5 | DBE | | | | |
| T106 | 20 | THINNER | 2 Curtain Dye Sprayer | UFO Oven | 12 HOUR | + |
| D106 | 5 | DBE | | | | |

Table 3 shows a comparison of the utilization rates and costs of acrylic thinner and dibasic ester.

**Table 3. Comparisons of costs and utilization rates of acrylic thinner and dibasic ester**

| | **Utilization Rate** | **TL/kg** | **Monthly Average Consumption (kg)** |
|---|---|---|---|
| **Acrylic thinner** | 4X | 24,77 | 280 |
| **Dibasic Ester** | X | 15,07 | 280 |

In the light of these data, it is understood that the use of dibasic ester in metal accessory dyeing process provides an effective, low-cost and environmentally and human health friendly metal accessory dyeing process. The scope of protection of the present invention is specified in the appended claims, and it is obvious that it cannot be limited to what is explained by way of example in this detailed description. A person skilled in the art will appreciate that similar uses can be put forward considering the scope of the invention in view of the foregoing.

## Claims

1. Use of dibasic ester as a dye solvent in a dyeing process of textile metal accessories and industrial metal accessories.

2. The use according to claim 1, **characterized in that** textile metal accessory or industrial metal accessory is a metal button.

3. A method for dyeing of metal accessory, wherein the method comprises the steps of:
- thinning the dye which will be used in the metal accessory dyeing process with dibasic ester,
- dyeing the metal accessory with the spraying method, and
- performing drying and curing processes.

4. A method according to claim 3, **characterized in that** the metal accessory in the first step of the method is a metal button.

5. A method according to claim 3, **characterized in that** the drying process in the third step of the method is performed in the oven.

6. A method according to claim 3, **characterized in that** the curing process in the third step of the method is performed for 10 to 14 hours.

7. A metal accessory obtained by the method according to claim 3.

8. A metal accessory according to claim 7, **characterized in that** the metal accessory is a metal button.
